Europäisches Patentamt

European Patent Office

Office européen des brevets

(11) Publication number: **0 142 604**
**A1**

## (12) EUROPEAN PATENT APPLICATION

(21) Application number: **84106761.4**

(22) Date of filing: **14.06.84**

(51) Int. Cl.⁴: **B 23 C 5/20**

(30) Priority: **07.11.83 US 549475**

(43) Date of publication of application:
**29.05.85 Bulletin 85/22**

(84) Designated Contracting States:
**AT BE CH DE FR GB IT LI LU NL SE**

(71) Applicant: **Lindsay, Harold William
Lindsay Enterprises, Inc. 2451 N.W. 30th
Portland Oregon 97210(US)**

(72) Inventor: **Lindsay, Harold William
Lindsay Enterprises, Inc. 2451 N.W. 30th
Portland Oregon 97210(US)**

(74) Representative: **Frankland, Nigel Howard et al,
FORRESTER & BOEHMERT Widenmayerstrasse 4/I
D-8000 München 22(DE)**

(54) A milling cutter.

(57) A milling cutter comprises a body with a rim having an annular seating surface and forming a lip around such surface, a spacer ring having a rim complementary to the seating surface and provided with a plurality of generally radial slots, a cutting insert received in each such slot, a side of the insert being supported by the seating surface, the lip preventing radially outward movement of the insert, and a retaining ring having a surface adapted to engage a second side of the insert to clamp it against the seating surface of the body.

FIG. 2

EP 0 142 604 A1

Croydon Printing Company Ltd.

- )-

A Milling Cutter.

THIS INVENTION relates to a milling cutter and more particularly to a rotary milling cutter having clamped indexable cutting inserts.

Milling cutters have previously been made to use clamped indexable cutting inserts. Such inserts are of polygonal cross-section, but may also be round, and have their sides ground perpendicular to their longitudinal axes to provide cutting edges. When one of the cutting edges becomes dull, a fresh cutting edge can be brought into a cutting position merely by indexing the insert on its axis and by turning the insert over until each side has been used.

Prior milling cutters of this type have generally required a separate holder for each individual insert. Proper location of the inserts has generally required the use of adjusting screws for each such holder. The resulting cutters have thus been complex and expensive to manufacture and have required significant skill and time to change and re-adjust the cutting inserts.

The present invention seeks to reduce or obviate the disadvantages of the prior art.

According to this invention there is provided a milling cutter comprising a body, means for mounting the body for rotary movement about an axis, and means on the body defining a plurality of recesses, each recess being adapted to contain a cutting insert characterised in that the body comprises a first portion defining a seating surface at a position remote from the axis of rotation of the body, and a spacer member connected to said first portion, the periphery of the spacer member defining a plurality of substantially radially extending slots extending completely therethrough,

0142604

said slots being located adjacent said seating surface, and a retaining element connected to the spacer element, there being a plurality of cutting inserts each received in one of said slots, the first side of the cutting insert being supported by said seating surface, and a second side of each cutting insert being engaged by a portion of a surface on the retaining element to clamp the insert against the said seating surface of the first body portion.

Preferably the first body portion, the spacer member and the retaining element are telescopically interconnected.

Conveniently the said first body portion is a disc, said seating surface being an annular seating surface formed on a rim located adjacent the periphery of the disc, said spacer member comprising a spacer ring having a rim with a surface complementary to the annular seating surface, said slots being formed in the rim of the spacer ring, the retaining element comprising a retaining ring.

Advantageously the first body portion defines a recess to accommodate a protrusion formed on the spacer ring to effect telescopic connection of said two elements.

Conveniently the spacer ring defines a recess and the retaining ring is provided with a protrusion adapted to be received in the recess to effect telescopic connection of the spacer ring and the retaining ring.

Preferably a lip is formed around the said seating surface to assist in retaining the cutting inserts in position.

Advantageously a groove or recess is formed in the surface of the retaining element adapted to engage said inserts and an elastomeric sealing element is disposed in the groove, the elastomeric sealing element engaging the cutting inserts resiliently to clamp the inserts against the seating surface of the first body portion.

In one embodiment the seating surface of the first body portion is substantially L-shaped in cross-section and the cutting insert is a square insert.

In an alternative embodiment the seating surface of the first body portion is arcuate in cross-section and each cutting insert is a substantially circular cutting insert.

The preferred milling cutter of the present invention comprises a body having an interior surface concentric with the axis of the cutter and which surface extends inwardly from one end of the body. The body has a rim extending radially outwardly of the interior surface. There is an annular seating surface formed on the rim. The rim forms a lip around the seating surface. A spacer ring having a first axially inwardly extending exterior surface and a second exterior surface complementary to the interior surface of the body, is telescoped together with the body. The spacer ring also has a rim which has a surface complementary to the annular seating surface of the body rim. The spacer ring rim has a plurality of generally radial slots extending completely therethrough. A cutting insert is received in each of the slots in the spacer ring rim such that the insert is supported by the annular seating surface of the body rim. The lip on the body rim is adapted to prevent radially outward movement of the insert. A retaining ring having an exterior surface complementary to the first surface of the spacer ring is telescoped together with the spacer ring. A portion of the exterior surface of the retaining ring is adapted to engage a side of the cutting insert, remote from the side supported by the annular seating surface, to clamp the insert against the annular seating surface of the body rim.

In one embodiment, the annular seating surface of the body rim is L-shaped in cross-section, thus to provide for use of square cutting inserts. A square cutting insert, one side of which is supported by the annular seating surface of the body rim, is prevented from radially outward movement of the lip on the body rim which engages and supports a second side of the insert.

The retaining ring is desirably provided with an annular groove in the portion of its exterior surface adapted to engage the remote side of the cutting insert. An elastomeric sealing ring, for example a neoprene O-ring, is disposed in the groove such that the ring engages the remote side of the insert resiliently to clamp the insert against the annular seating surface of the body rim.

From the foregoing it will be appreciated that the preferred embodiment of the present invention provide a milling cutter suitable for use with indexable cutting inserts which will eliminate the need for a separate holding member for each such insert, and that the cutter that can use a greater number of cutting inserts than has heretofore been possible. The preferred cutter has a single locating plate and a single retaining plate irrespective of the number of cutting inserts used, and the cutter can be used at extremely high cutting speeds.

In order that the invention may be more readily understood and so that further features thereof may be appreciated, the invention will now be described by way of example with reference to the accompanying drawings in which:

Figure 1 is a top plan view of a milling cutter in accordance with the invention;

Figure 2 is a sectional view on line 2-2 of Figure 1;

Figure 3 is a sectional view on line 3-3 of Figure 1;

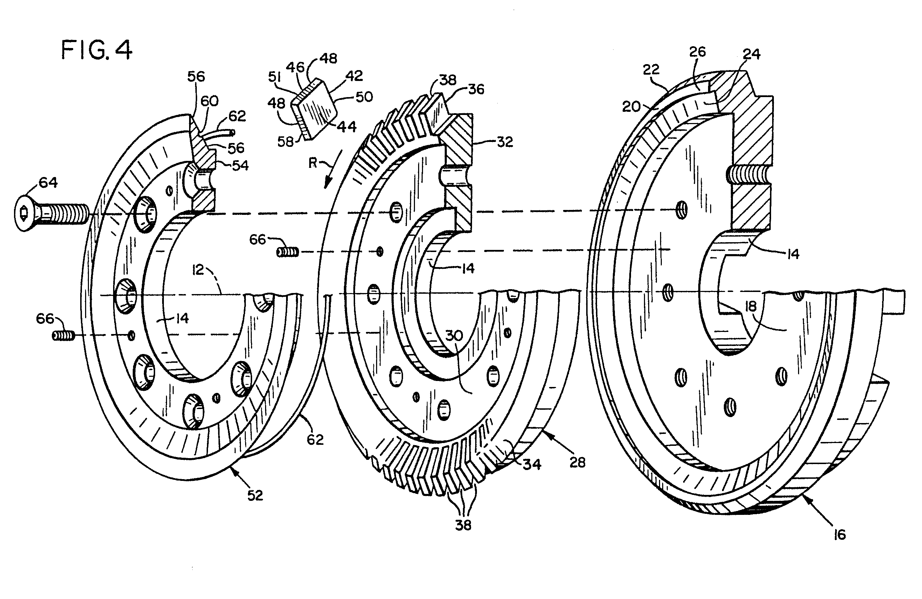

Figure 4 is an exploded perspective view with parts broken away of the cutter of Figure 1; and

Figure 5 is a sectional view similar to Figure 2 of an alternate embodiment of a cutter in accordance with the invention.

Referring to the drawings, a milling cutter 10 in accordance with the invention is provided at its center or axis 12 with an arbor hole 14 by which the cutter is fastened to a spindle (not shown). The cutter 10 comprises a body 16 in the form of a disk having an interior surface 18 which is in a plane perpendicular to and which is concentric with the axis 12 and extends inwardly from the periphery 20 of the milling cutter which is remote from the spindle.

The body 16 has a rim 22 located radially outwardly of the surface 18 and extending forwardly above the plane of the surface 18. An annular seating surface 24 is formed by an inclined face and an abutment on the rim.

The surface 24 is thus substantially L-shaped in cross-section and forms a lip 26 on the rim 22.

A spacer ring 28 is provided with a first axially inwardly extending surface 30 and a second exterior surface 32. The second surface 32 is generally complementary to the interior surface 18 of the body 16. Thus the spacer ring 28 and the body 16 are adapted to be telescopically joined together as shown.

The spacer ring 28 is also provided with a rim 34, which has a surface 36 generally complementary to the annular seating surface 24 of the body rim 22. Thus, when the spacer ring 28 is seated adjacent the interior surface 18 of the body 16, the surface 36 of the rim 34 is adjacent the surface 24 of the rim 22, the rim 34 generally being received within the surface 24.

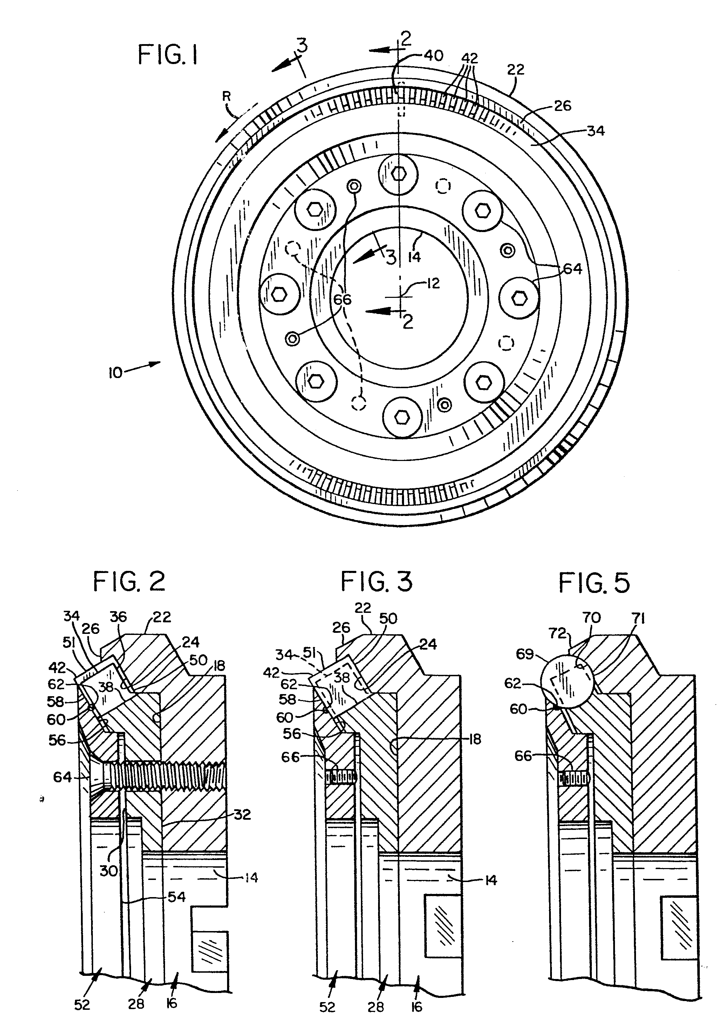

The spacer ring rim 34 is provided with a plurality of generally radial slots 38 extending completely through it. In a preferred embodiment each slot is cut such that the leading face 40 of a cutting insert 42 when located in the slot, is on a diameter of the cutter 10. See Figure 1, in which the direction of rotation is shown by the arrow R, thus defining the leading face of each cutting insert.

A cutting insert 42 is received in each slot 38. Such cutting inserts are typically made of carbide and have end faces 44 ground perpendicular to their length. The intersection of the insert faces 44 with the sides 46 provide as many cutting edges 48 as there are sides to the insert. The cutting edge 48 takes the cutting thrust, in use of the device. By indexing the inserts about their longitudinal axes, each of the cutting edges 48 may successively be brought into a cutting position.

As shown in the drawings, each insert 42 is received within a slot 38 in the rim 34 of the spacer ring 28. A first side 50 is supported by the annular seating surface 24 of the rim 22. In the case of square inserts, as illustrated the lip 26 prevents radially outward movement of the insert by engaging and supporting a second side 51, retaining the insert within the rim 22.

A retaining ring 52 has an exterior surface 54 generally complementary to the surface 30 of the spacer ring such that the retaining ring and spacer ring 28 also fit telescopically together. A portion 56 of the surface 54 of the ring 52 is positioned generally adjacent another side 58 of the inserts 42 to clamp the inserts 42 against the annular seating surface 24 and lip 26.

The portion 56 of the surface 54 of the ring 52 is provided with an annular groove 60 in which is disposed an elastomeric sealing ring 62, which is preferably a round cross-section neoprene O-ring. When the retaining ring 52 is in position adjacent the spacer ring 28, the ring 62 engages the sides 58 of the inserts 42 resiliently to clamp them against the annular seating surface 24 and lip 26.

The body 16, spacer ring 28 and retaining ring 52 are assembled and held together using countersunk flathead bolts 64 as shown. In order to facilitate disassembly, each of the retaining ring 52 and spacer ring 28 is provided with jack screws 66 to separate each such element from the adjacent one.

A 15.25 cm (6 inch) diameter cutter formed in accordance with the invention can accommodate ninety carbide inserts 42, that is, approximately 2 inserts per cm (or approximately five inserts per inch) circumferentially of the cutter. All such inserts 42 are retained by the single retaining ring 52, being positioned circumferentially by the slots 38 in the spacer ring 28. Such slots are preferably made with $1.27 \times 10^{-3}$ cms (0.0005 inch) clearance which is sufficient to provide circumferential support for the inserts. Uniform axial projection of the inserts is achieved by the accurate machining of the surface 24. Separate holders for each insert and/or adjusting screws are unnecessary.

The present invention thus provides a simple economical milling cutter adapted to handle a large number of cutting inserts without individual holders or clamps and without any adjusting screws. Only the retaining ring 52 and the spacer ring 28 are needed to retain the inserts in position. The cutter may be operated at speeds up to 460 cms per minute (180 inches per minute).

Although the invention has been illustrated using square inserts 42, circular inserts 69 may also be used. See Figure 5. In this embodiment an annular seating surface 70 is formed with a round cross-section 71. A lip 72 retains the circular inserts 69 against radially outward movement.

The features disclosed in the foregoing decription, in the following claims and/or in the accompanying drawings may, both separately and in any combination thereof, be material for realising the invention in diverse forms thereof.

CLAIMS:

1.     A milling cutter comprising a body, means for mounting the body for rotary movement about an axis, and means on the body defining a plurality of recesses, each recess being adapted to contain a cutting insert characterised in that the body comprises a first portion defining a seating surface at a position remote from the axis of rotation of the body, and a spacer member connected to said first portion, the periphery of the spacer member defining a plurality of substantially radially extending slots extending completely therethrough, said slots being located adjacent said seating surface, and a retaining element connected to the spacer element, there being a plurality of cutting inserts each received in one of said slots, the first side of the cutting insert being supported by said seating surface, and a second side of each cutting insert being engaged by a portion of a surface on the retaining element to clamp the insert against the said seating surface of the first body portion.

2.     A milling cutter according to claim 1, wherein the first body portion, the spacer member and the retaining element are telescopically interconnected.

3.     A milling cutter according to claim 1 or 2, wherein the said first body portion is a disc, said seating surface being an annular seating surface formed on a rim located adjacent the periphery of the disc, said spacer member comprising a spacer ring having a rim with a surface complementary to the annular seating surface, said slots being formed in the rim of the spacer ring, the retaining element comprising a retaining ring.

4.     A milling cutter according to any one of the preceding claims, wherein the first body portion defines a recess to accommodate a protrusion formed on the spacer ring to effect telescopic connection of said two elements.

5.     A milling cutter according to any one of the preceding claims, wherein the spacer ring defines a recess and the retaining ring is provided with a protrusion adapted to be received in the recess to effect telescopic

-2-

0142604

connection of the spacer ring and the retaining ring.

6.     A milling cutter according to any one of the preceding claims, wherein a lip is formed around the said seating surface to assist in retaining the cutting inserts in position.

7.     A cutter according to any one of the preceding claims, wherein a groove or recess is formed in the surface of the retaining element adapted to engage said inserts and an elastomeric sealing element is disposed in the groove, elastomeric sealing element engaging the cutting inserts resiliently to clamp the inserts against the seating surface of the first body portion.

8.     A cutter according to any one of the preceding claims, wherein the seating surface of the first body portion is substantially L-shaped in cross-section and the cutting insert is square insert.

9.     A cutter according to any one of claims 1 to 7, wherein the seating surface of the first body portion is arcuate in cross-section and each cutting insert is a substantially circular cutting insert.

FIG. 1

FIG. 2

FIG. 3

FIG. 5

FIG. 4

European Patent
Office

**EUROPEAN SEARCH REPORT**

| | **DOCUMENTS CONSIDERED TO BE RELEVANT** | | EP 84106761.4 | |
|---|---|---|---|---|
| Category | Citation of document with indication, where appropriate, of relevant passages | Relevant to claim | CLASSIFICATION OF THE APPLICATION (Int. Cl 4) | |
| A | DD - A - 160 041 (REINHARDT)<br>* Totality *<br>-- | 1,3,4, 5,6,9 | B 23 C 5/20 | |
| A | DE - B - 1 502 125 (FAGERSTA)<br>* Fig. 1-4 *<br>-- | 1 | | |
| A | DD - A - 132 310 (BRANDT)<br>* Totality *<br>---- | 1-9 | | |
| | | | **TECHNICAL FIELDS SEARCHED (Int. Cl.4)** | |
| | | | B 23 C 5/00 | |
| | The present search report has been drawn up for all claims | | | |

| Place of search | Date of completion of the search | Examiner |
|---|---|---|
| VIENNA | 24-01-1985 | FUCHS |